# EUROPEAN PATENT APPLICATION

(11) **EP 0 783 187 A1**
(43) Date of publication of application: **09.07.1997**
(21) Application number: 96120101.9
(22) Date of filing: 13.12.1996
(51) Int. Cl.: H01M 2/02

(54) **Valve-regulated lead-acid battery**

(30) Priority: 14.12.1995 JP 347923/95
(71) Applicant: Japan Storage Battery Company Limited, Minami-ku Kyoto-shi Kyoto (JP)
(72) Inventor: Yonezu, Kunio, c/o Japan Storage Battery Co., Ltd., Kyoto-shi, Kyoto (JP); Nitta, Eiji, c/o Japan Storage Battery Co., Ltd., Kyoto-shi, Kyoto (JP)
(74) Representative: Grünecker, Kinkeldey, Stockmair & Schwanhäusser Anwaltssozietät

(57) **Abstract**

A valve-regulated lead-acid battery according to the present invention uses a battery case formed from a polyolefin resin containing a flame retardant agent and inorganic powder. A halogenic compound such as particularly a bromic flame retardant agent is used as the flame retardant agent.

## Description

### BACKGROUND OF THE INVENTION

### 1. Field of the Invention

The present invention relates to a valve-regulated lead-acid battery, and particularly to an improvement of a battery case thereof.

### 2. Description of the Related Art

The valve-regulated lead-acid battery has been taking the place of a conventional vented liquid type lead-acid battery which requires periodical maintenance such as topping up as an electric source for cordless household appliances with the advance of popularization thereof, and as a reserved electric source or an operation electric source for various large-size maintenance-free electric appliances/apparatuses. The development of absorptive micor-glass separator which is formed from extrafine glass fiber has high porosity and has exellent liquid preserving property makes a great contribution to one of factors for realizing such a maintenance-free valve-regulated battery.

Such a maintenance-free battery could be realized by sealing a lead-acid battery, because a principle called "oxygen cycle" is employed in which oxygen gas generated from positive electrodes during charging is absorbed at negative electrodes through separators. That is, the amount of electrolyte is limited to such an extent that the separator becomes wet to facilitate diffusion of oxygen gas which occurs to a negligible extent in a vented liquid type battery filled with an electrolyte.

On the other hand, since a valve-regulated battery is designed such that the amount of the electrolyte is small, even a small change of the amount of the electrolyte gives a large influence onto the performance of the battery. If a battery in which the amount of the electrolyte is decreased slightly is examined actually, it can be found that not only the sulfuric acid concentration has become high so that the corrosion of the grids is serious but also the capacity of the battery decreases rapidly so that the life of the battery is shortened. Accordingly, from this fact, the followings are necessary to suppress the lowering of the life and capacity of the battery. Namely, it is necessary to suppress the loss of water due to diffusion or dissipation through a wall of the battery case to the outside as less as possible, even though the decrease of the amount of the electrolyte, that is, the decrease of the water due to electrolysis in use can not be avoided.

The relation between a battery case material and its water-permeability will be described below. Generally, AS (acrylonitrile-styrene copolymer), ABS (acrylonitrile-butadiene-styrene copolymer), PP (polypropylene), PE (polyethylene) and a ethylene-propylene copolymer (EPP), or the like, is used as a material for a battery case and a cover of a lead-acid battery. The actually measured values of water vapor permeability in these synthetic resins are as shown in Table 1.

**TABLE 1**

| KIND OF RESIN | PERMEABILITY OF WATER VAPOR (25°C) (g·250µm/m²·24Hr·atm) | YOUNG'S MODULUS (Kgf/mm²) |
|---|---|---|
| AS | 4.4 | 500-800 |
| ABS | 3.3 | 200-300 |
| PP | 0.16 | 120-180 |
| EPP (SILICA POWDER ADDED BY 15%) | 0.15 | 250-500 |
| PE | 0.05 | 80-100 |

It is apparent from Table 1 that the water vapor permeability decreases in the order of AS > ABS > PP > EPP > PE and that the values of polyolefin materials such as PE, PP and EPP are particularly small compared with those of the other materials. Accordingly, a polyolefin resin such as PP, PE, EPP, or the like, is preferably used as a material for a battery case of a valve-regulated battery.

As another property required for a battery case of a valve-regulated battery, there is bending modulus of elasticity (Young's modulus, stiffness). In some cases, the ratio of hydrogen gas to oxygen gas generated in a battery during charging is not 2 : 1 but oxygen gas is richer. Accordingly, if charging is interrupted and the battery is left as it is, oxygen gas is absorbed to the negative electrode so that pressure may be decreased by about 0.5 kgf/cm². Of course, in many cases, pressure may be increased by 0.1-0.3 kgf/cm² as the operation pressure of an exhaust valve, as the gauge pressure. The wall of the battery case is swollen or dented by increase/decrease of the pressure in the cell. Thus, in a valve-regulated battery in which the amount of electrolyte is limited, a gap may be formed between an electrode plate and an absorptive micro-glass separator, or the absorptive micro-glass separator is filled with the electrolyte to thereby give a bad influence onto the performance of the battery. The Young's moduli of resins which are also used as material for the battery case are shown in Table 1.

The Young's moduli of PE, PP and EPP which are low in water vapor permeability are smaller than those of AS and ABS. Therefore, the battery case of PE, PP or EPP is undesirably greatly deformed by the change of the cell inside pressure of the cell, and is not preferable for the battery case.

There is expectation that, if inorganic powder such as silica powder is added to a polyolefin resin such as EPP, the Young's modulus, that is, stiffness becomes large so that not only the deformation due to the pressure change can be reduced by half but also the water vapor permeability of the battery case can be reduced more greatly.

Incidentally, inorganic-powder-containing EPP is seldom used as a material for a battery case of a valve-regulated battery.

Safety in handling is one of the properties required for a lead-acid battery. If a lead-acid battery is self-discharged or charged at a large current, oxygen and hydrogen gases are generated from the positive and negative plates respectively to thereby remain in the battery. In a valve-regulated battery, the volume of gas phase spaces is increased so that the amount of the remaining gasses becomes large because the amount of liquid is selected to be small. Because the composition of the remaining gasses may be near that of an oxygen-hydrogen explosive mixture gas, there is a risk of explosion if any ignition source is present.

Although there is no ignition source in a battery in an ordinary state, there is a possibility of occurrence of a spark, or the like, due to electrostatic charge when the outer wall surface of the battery case is rubbed with a dry cloth or the like to clean the outside of the battery, and this may become an ignition source. Accordingly, from the point of view of safety, it is necessary to suppress the battery case from being charged electrostatically. To suppress such electrostatic charge of the battery case, electrically conductive particles such as carbon black is generally used. However, such particles can not be employed because a current conducting circuit is formed between the positive and negative electrodes to thereby accelerate the self-discharging of the battery, though a condition for establishment of a battery is to keep the positive and negative electrodes electrically insulated from each other. There is another method of mixing a suitable surface active agent. In this method, the surface active agent gradually moves to the surface so as to be decomposed, and the effect of the surface active agent cannot be maintained permanently. At present, there is not yet found any method of permanently preventing the battery case from being electrostatically charged, and development of a method which can be carried out easily and which can be realized at low cost is required.

Regarding safety, it is required for a battery to prevent combustion of a battery case for some purposes of use. In a battery, thermal running away is caused by a flow of a large current due to a failure of a charger, or the like, temperature rising is caused because of internal or external short-circuit. For such a case, the ignition and combustion of the battery case must be suppressed. To give flame retardance to the battery case, generally, chlorinated paraffin, an antimonial compound or the like is added as a flame retardant agent to the polyolefin resin and a bromic compound such as tetrabromo-bisphenol A (TBA) or the like is added as a flame retardant agent to the ABS.

### SUMMARY OF THE INVENTION

It is an object of the present invention to provide a valve-regulated lead-acid battery which simultaneously solves the disadvantages in a conventional valve-regulated battery, that is, disadvantages of the AS or ABS resin: (1) the battery case is apt to be electrostatically charged; (2) the battery case is combustible; (3) the battery case is permeable to water vapor; without lowering the Young's modulus thereof.

In order to solve the aforementioned problems, the valve-regulated battery according to the present invention having a battery case using a flame retardant agent such as a halogenic compound, or the like, and inorganic powder such as silica powder, or the like, are added/mixed to a polyolefin resin.

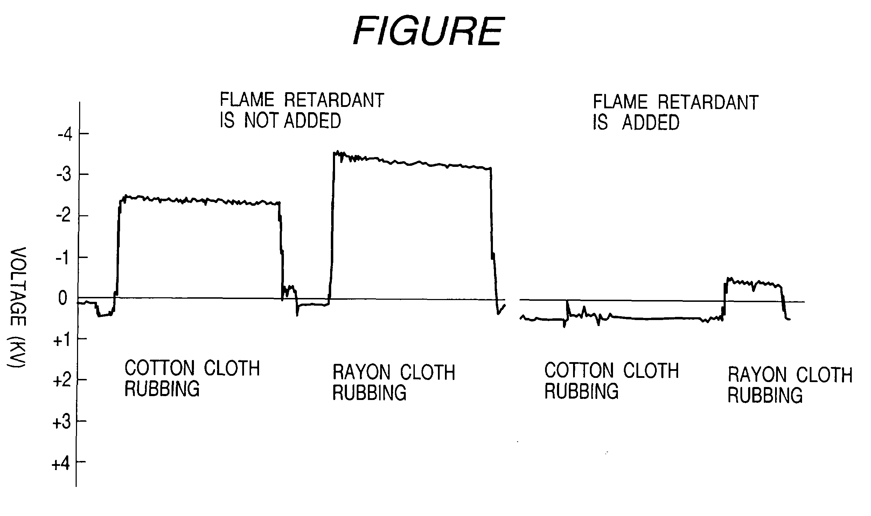

### BRIEF DESCRIPTION OF THE DRAWING

Figure is a graph for comparing electrostatic charge voltage.

### DETAILED DESCRIPTION OF THE INVENTION

Detailed description of the invention will be described as follows referring to the accompanying drawing.

Figure shows a result of an experiment in which electrostatic charge voltage generated by rubbing with cotton cloth or rayon cloth was examined upon the two cases where tetrabromo-bisphenol A (TBA) which was a halogen type flame retardant agent was added to EPP and where TBA was not added to EPP. It is apparent from the experiment that the halogen-type flame retardant agent has not only a flame retarding function but also a function of suppressing electrostatical charging.

A polyolefin resin having low water vapor permeability is used as the battery case material and inorganic powder such as silica powder or the like is added thereto to increase the Young's modulus of the battery case so that not only the deformation due to the inside pressure change can be reduced but also the water vapor permeation can be suppressed effectively. In addition, a halogen-type flame retardant agent can be used as the flame retardant agent not only to give flame retardance and self-extinguishing property but also to extremely reduce electrostatic charge. A safe and long-life valve-regulated battery can be obtained by using the battery case obtained in the aforementioned configuration.

### EXAMPLE

The characteristic of a test piece prepared by mixing 0.2 % of tetrabromo-bisphenol A (TBA) and 15 % of silica powder (CARPLEX #80) into EPP is shown in Table 2 in comparison with the characteristic of a test piece prepared without addition of TBA and silica powder, and with the characteristic of a test piece prepared by adding the same additive to an ABS resin.

**TABLE 2**

| KIND OF RESIN | EPP | EPP | ABS |
|---|---|---|---|
| ADDITION OF INORGANIC POWDER AND FIRE RETARDANT AGENT | PRESENT | ABSENT | PRESENT |
| SUPPRESSION OF STATIC CHARGE PROPERTY | B | D | B |
| FLAME RETARDANCE | B | D | B |
| SUPPRESSION OF WATER VAPOR PERMEATION | A | B | C |

In Table 2, A, B, C and D show "excellent", "good", "passable" and "failure" respectively.

It can be understood from the result that the material prepared by adding silica powder and a bromic flame retardant agent to EPP is most preferred as the battery case material. Incidentally, the Young's modulus of EPP is increased by about 50 % when 5 % by weight of silica powder is added to EPP. Although the Young's modulus of EPP increases as the amount of silica powder to be added increases, it is preferable, from limitation on the formation by injection of the battery case, that the amount of silica powder to be added is not larger than 25 % and especially amount of silica powder from 10% to 20 % by weight is preferable. Alternatively, instead of silica powder, other inorganic powder material such as alumina, glass, or the like, may be used as a mixture material or may be used independently.

As described above, the valve-regulated battery according to the present invention has a battery case which uses a polyolefin resin having low water vapor permeability and containing inorganic powder. Accordingly, it is possible to obtain a long-life battery which is lower in water vapor permeability and little in reduction of an electrolyte. There is a further advantage that the stiffness, that is, Young's modulus of the polyolefin resin is increased to about twice by mixing inorganic powder to the polyolefin resin so that the battery case can be prevented from being deformed by the change of the inside pressure of the battery. Further, because a bromic flame retardant agent is added as a flame retardant agent to the polyolefin resin, the battery case has flame retarding property. Accordingly, there is a little risk of combustion of the battery case even if the battery generates heat. Furthermore, because the bromic flame retardant agent has an electrostatic charge suppressing property, ignition explosion caused by an electrostatic spark as occurs sometimes at the time of cleaning the battery can be avoided so that a safe battery can be provided.

## Claims

1. A valve-regulated lead-acid battery having a battery case comprising a polyolefin resin containing a flame retardant agent and inorganic powder.

2. A valve-regulated lead-acid battery according to claim 1, wherein said flame retardant agent is a halogenic compound.

3. A valve-regulated lead-acid battery according to claim 2, wherein said flame retardant agent is a bromic compound.

4. A valve-regulated lead-acid battery according to claim 1, wherein the amount of said inorganic powder to be added is in a range of from 5 to 25 % by weight and said polyolefin resin is an ethylene-propylene copolymer (EPP).

5. A valve-regulated lead-acid battery according to claim 3, wherein the amount of said inorganic powder to be added is in a range of from 5 to 25 % by weight and said polyolefin resin is a ethylene-propylene copolymer (EPP).

6. A valve-regulated lead-acid battery according to claim 5, wherein the amount of said inorganic powder to be added is in a range of from 10 to 20 % by weight.

7. A valve-regulated lead-acid battery according to claim 1, wherein said inorganic powder is a silica powder.
